# FASCICULE DE BREVET EUROPEEN

(11) **EP 3 422 520 B1**
(45) Date de publication et mention de la délivrance du brevet: **25.08.2021**
(21) Numéro de dépôt: 18180920.3
(22) Date de dépôt: 29.06.2018
(51) Int. Cl.: H02J 3/28, H02J 15/00

(54) **SYSTÈME ET PROCÉDÉ DE CONTRÔLE DU NIVEAU DE TENSION SUR UN RÉSEAU D'ALIMENTATION ÉLECTRIQUE BASSE TENSION**
SYSTEM UND VERFAHREN ZUR KONTROLLE DES SPANNUNGSNIVEAUS IN EINEM NIEDRIGSPANNUNGS-STROMVERSORGUNGSNETZ
SYSTEM AND METHOD FOR MONITORING THE VOLTAGE LEVEL ON A LOW VOLTAGE POWER SUPPLY NETWORK

(30) Priorité: 30.06.2017 FR 1756085
(43) Date de publication de la demande: 02.01.2019
(73) Titulaire: Electricité de France, 75008 Paris (FR)
(72) Inventeur: MALISANI, Paul, 75018 PARIS (FR); COINCE, Anne-Sophie, 77210 AVON (FR); JECU, Cristian, 77190 DAMMARIE-LES-LYS (FR)
(74) Mandataire: Regimbeau

(56) Documents cités:
- WO-A1-2015/135934
- WO-A1-2016/156301
- US-A1- 2010 004 790

## Description

### Domaine de l'invention

La présente invention concerne le contrôle du niveau de tension électrique sur un réseau d'alimentation électrique basse tension.

La présente invention a notamment pour objectif de limiter les surtensions susceptibles d'apparaitre sur un réseau d'alimentation électrique basse tension.

La présente invention s'applique en particulier aux réseaux d'alimentation électrique basse tension sur lesquels sont connectés des moyens de production électrique susceptibles de générer des surtensions, notamment des moyens de production du type à base d'énergie renouvelable, en particulier des panneaux photovoltaïques.

### Art antérieur

Il existe de nombreux réseaux électriques sur lesquels sont connectés des moyens de production à base d'énergie renouvelable.

Dans certaines circonstances, ces moyens de production peuvent induire des surtensions en cas de surproduction.

Actuellement pour résoudre les problématiques de surtension locale, la seule protection est la déconnexion des sources de production à base d'énergie renouvelable (cette fonction est généralement intégrée dans les onduleurs des panneaux photovoltaïques solaires). Ceci peut entrainer la déconnexion systématique des panneaux en cas de production supérieure à la consommation pour respecter le plan de tension.

Cette protection de découplage présente donc un inconvénient majeur : celui d'entrainer une perte de productible, c'est-à-dire une perte de potentiel de production électrique.

### Besoin / Problème général dans le contexte de l'invention

La présente invention a pour objectif de proposer une solution technique au problème de la gestion des surtensions sur un réseau d'alimentation électrique basse tension.

Le document WO 2016/156301 décrit un système de contrôle de tension conforme au préambule de la revendication 1.

La présente invention trouve une application particulière dans le contexte de l'article 199 de la loi de transition énergétique n°2015-992 publiée au Journal Officiel de la République Française le 18 août 2015. Cet article prévoit notamment que, à titre expérimental et pour une durée de quatre ans à compter de la promulgation de la loi, les établissements publics et des collectivités peuvent, en association avec des producteurs et des consommateurs et, le cas échéant, d'autres collectivités publiques, proposer au gestionnaire d'un réseau public de distribution d'électricité la réalisation d'un service de flexibilité local sur des portions de ce réseau. Ce service a pour objet d'optimiser localement la gestion des flux d'électricité entre un ensemble de producteurs et un ensemble de consommateurs raccordés au réseau public de distribution d'électricité.

Un objectif majeur de la présente invention est ainsi d'empêcher la déconnexion des moyens de production électrique, notamment de panneaux solaires, installés sur le réseau électrique basse tension, en cas de surtension due à la surproduction.

En effet comme évoqué précédemment dans les réseaux connus classiques une injection de puissance par les moyens de production fait augmenter la tension. Dans ce cas, la protection de découplage déconnecte automatiquement la source (panneaux photovoltaïques, éolienne...) générant une perte de production d'énergie renouvelable.

### Problème technique

Le problème technique posé dans le cadre de la présente invention est donc de gérer à moindre coût les problématiques de surtensions sans perte du productible d'énergies renouvelables.

### Solutions proposées - Principes

Les objectifs précités sont atteints selon la présente invention grâce à un système de contrôle du niveau de tension sur un réseau d'alimentation électrique basse tension comprenant des moyens de production électrique, notamment un réseau comprenant des moyens de production électrique à base d'énergie renouvelable, et comportant des moyens de stockage d'énergie du type batteries électriques ou charges notamment résistives associées à un stockage de chaleur (par exemple chauffe-eau à effet joule à accumulation).

Le système proposé comprend :
- des moyens adaptés pour mesurer la tension sur le réseau,
- des moyens adaptés pour activer et désactiver tout ou partie des moyens de stockage d'énergie, par exemple des résistances d'un chauffe-eau à effet joule,
- des moyens adaptés pour piloter l'activation et la désactivation des moyens de stockage d'énergie, par exemple d'un chauffe-eau à effet joule, en fonction de la tension mesurée sur le réseau par rapport à des seuils prédéterminés, et
- des moyens adaptés pour estimer l'impact d'une activation du moyen de stockage d'énergie, par exemple du chauffe-eau à effet joule, sur la tension du réseau et pour n'autoriser une activation du moyen de stockage d'énergie, par exemple du chauffe-eau à effet joule, que si cette activation ne conduit pas à une oscillation entre des cycles successifs d'activation et de désactivation pour éviter des oscillations résultant de l'activation et désactivation des moyens de stockage d'énergie, par exemple du chauffe-eau à effet joule.

L'on comprendra à la lecture de la description qui va suivre que les moyens proposés dans le cadre de la présente invention permettent de s'affranchir de la nécessité d'un système de communication entre les moyens de stockage d'énergie répartis sur le réseau formés par exemple par les charges du type chauffe-eau à effet joule. L'autonomie de la solution proposée évite un coût d'installation supplémentaire et renforce la robustesse et la fiabilité. L'ajout optionnel d'une communication peut améliorer les performances de la solution concernant la stabilité du réseau grâce à la possibilité d'une coordination.

L'invention conduit à un système facilement installable sans besoin de rendre les charges communicantes entre elles ou avec un tiers.

L'invention conduit également à un système facilement compatible avec les produits existants.

Selon d'autres caractéristiques avantageuses de la présente invention :
- chaque moyen de stockage d'énergie, par exemple chaque chauffe-eau à effet joule, a une puissance modulable.
- chaque moyen de stockage d'énergie, par exemple chaque chauffe-eau à effet joule, comprend plusieurs éléments, par exemple plusieurs résistances dans le cas d'un chauffe-eau à effet joule, de préférence entre 2 et 5 éléments, par exemple entre 2 et 5 résistances, typiquement 4 éléments, pour permettre une modulation par palier de la consommation activée en fonction du niveau de tension mesurée sur le réseau.
- chaque moyen de stockage d'énergie, par exemple chaque chauffe-eau à effet joule, a une puissance modulable en continu.
- la loi définissant la puissance de consommation demandée à chaque moyen de stockage d'énergie, par exemple au chauffe-eau à effet joule, en fonction de la tension mesurée sur le réseau, présente une hystérésis.
- L'estimation de l'impact est réalisée par auto-apprentissage en mesurant les écarts de tension suite à la connexion/déconnexion de chaque moyen de stockage d'énergie, par exemple du chauffe-eau à effet joule.
- le système comprend des moyens qui détectent l'état du moyen de stockage d'énergie, par exemple du chauffe-eau à effet joule, et qui limitent l'activation du moyen de stockage d'énergie, par exemple du chauffe-eau à effet joule, lorsque celui-ci a atteint sa capacité maximale de stockage.
- le système peut être relié à la sortie télé-information d'un compteur électrique (pour se substituer à des capteurs installés au niveau de la charge) et pilote l'alimentation électrique de chaque moyen de stockage d'énergie, par exemple d'un chauffe-eau à effet joule.

La présente invention concerne également un ensemble comprenant une pluralité de systèmes du type précité, les systèmes étant associés respectivement à un logement dédié ou similaire et fonctionnant indépendamment les uns des autres.

La présente invention concerne par ailleurs un module de contrôle du niveau de tension sur un réseau d'alimentation électrique basse tension comprenant des moyens de production électrique, notamment un réseau comprenant des moyens de production électrique à base d'énergie renouvelable, comprenant :
- un système de contrôle du type précité,
- un moyen de stockage d'énergie, par exemple un chauffe-eau à effet joule,
- un dispositif de commande du moyen de stockage d'énergie, par exemple du chauffe-eau à effet joule, et
- un dispositif indicateur de saturation du moyen de stockage d'énergie, par exemple du chauffe-eau à effet joule, qui indique si la charge est pleine ou non pleine.

Selon un autre aspect, la présente invention concerne un procédé de contrôle du niveau de tension sur un réseau d'alimentation électrique basse tension comprenant des moyens de production électrique, notamment un réseau comprenant des moyens de production électrique à base d'énergie renouvelable et comportant des moyens de stockage d'énergie du type batteries électriques ou charges, notamment résistives, associées à un stockage de chaleur, par exemple un chauffe-eau à effet joule à accumulation, le procédé comprenant les étapes qui consistent à :
- mesurer la tension sur le réseau,
- activer tout ou partie des moyens de stockage d'énergie, par exemple des résistances d'un chauffe-eau à effet joule lorsque la tension mesurée sur le réseau dépasse la valeur de seuils prédéterminés,
- désactiver tout ou partie des moyens de stockage d'énergie, par exemple d'un chauffe-eau à effet joule, lorsque la tension mesurée sur le réseau devient inférieure à des seuils prédéterminés, et
   - anticiper les effets d'un changement de consigne pour éviter des oscillations résultant de séquences répétitives d'activation/désactivation de tout ou partie des moyens de stockage d'énergie, par exemple de la puissance d'un chauffe-eau à effet joule à l'aide de moyens adaptés pour estimer l'impact d'une activation du moyen de stockage d'énergie, par exemple du chauffe-eau à effet joule, sur la tension du réseau et pour n'autoriser une activation du moyen de stockage d'énergie, par exemple du chauffe-eau à effet joule, que si cette activation ne conduit pas à une oscillation entre des cycles successifs d'activation et de désactivation.

### Descriptif rapide des figures

D'autres caractéristiques, buts et avantages de la présente invention apparaitront à la lecture de la description détaillée qui va suivre et en regard des dessins annexés, donnés à titre d'exemples non limitatifs, et sur lesquels :
- la figure 1 représente la structure générale d'un module de contrôle conforme à la présente invention,
- la figure 2 représente un exemple d'une loi de commande puissance/tension avec hystérésis mise en œuvre dans le cadre de la présente invention pour un Chauffe-eau à Effet Joule (CEJ) comportant 4 résistances,
- la figure 3 représente l'organigramme du procédé de base conforme à la présente invention et
- la figure 4 représente un organigramme du procédé conforme à la présente invention dans le cas d'une charge modulable par paliers.

### Description détaillée de l'invention

Dans la description détaillée qui va suivre, la présente invention sera décrite en référence à un mode de réalisation dans lequel le moyen de stockage d'énergie est formé d'un chauffe-eau à effet joule à accumulation, dans un but de simplification. Cependant la présente invention n'est pas limitée à ce mode de réalisation. Elle englobe toute variante de moyen de stockage d'énergie à base d'une alimentation électrique, notamment et non exclusivement, des batteries électriques, en particulier des batteries comprenant plusieurs cellules ou modules pour permettre de moduler la puissance consommée à partir du réseau de distribution, ou encore toute charge, notamment résistive, associée à un stockage de chaleur.

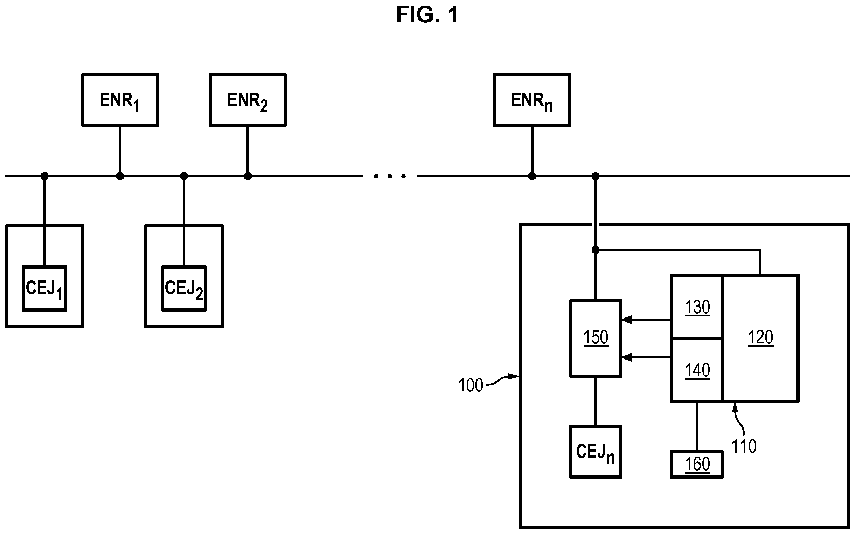

Comme illustré schématiquement sur la figure 1, la présente invention concerne les réseaux électriques basse tension 10 connectés à des charges, par exemple du type chauffe-eau à effet joule CEJ, et des unités de production d'énergie électrique à base d'énergie renouvelable ENR. Sur la figure 1 on a représenté 3 charges de type chauffe-eau à effet joule CEJ1, CEJ2 et CEJn. L'invention n'est évidemment pas limitée à un réseau 10 comprenant 3 charges CEJ. Sur la figure 1 on a également représenté 3 unités de production d'énergie électrique à base d'énergie renouvelable ENR1, ENR2 et ENRn. L'invention n'est évidemment pas limitée à un réseau 10 comprenant 3 unités de production ENR.

L'invention propose un système 110 de contrôle du niveau de tension sur le réseau d'alimentation électrique basse tension 10.

Un tel système 110 est intégré de préférence au niveau de chaque entité utilisatrice équipée d'une charge, par exemple du type chauffe-eau à effet joule CEJ (bien qu'un tel système 110 ne soit représenté sur la figure 1 que pour le chauffe-eau CEJn afin de simplifier l'illustration) et comprend:
- des moyens 120 adaptés pour mesurer la tension sur le réseau 10 et pour piloter le système,
- des moyens 130 pilotés par les moyens 120 et adaptés pour piloter l'activation et la désactivation des moyens de stockage d'énergie en fonction de la tension mesurée sur le réseau par rapport à des seuils prédéterminés, par exemple activer un chauffe-eau à effet joule CEJ lorsque la tension sur le réseau 10 dépasse un premier seuil prédéterminé, par exemple une valeur légèrement supérieure à la valeur nominale du réseau, et désactiver le chauffe-eau à effet joule CEJ lorsque la tension sur le réseau redescend sous un seuil de désactivation prédéterminé (une valeur inférieure au seuil d'activation prédéterminé), et
- des moyens, de préférence intégrés aux moyens 120, adaptés pour éviter des oscillations résultant de l'activation et de la désactivation des moyens de stockage d'énergie, par exemple du chauffe-eau à effet joule CEJ.

De préférence le système 110 comprend également des moyens 140, également pilotés par les moyens 120, adaptés pour désactiver les moyens de stockage d'énergie, par exemple le chauffe-eau à effet joule CEJ associé, lorsque l'écart entre la tension sur le réseau 10 et une valeur de découplage des moyens de production électrique ENR devient inférieur à un deuxième seuil prédéterminé,

L'invention propose ainsi, pour gérer les surtensions, d'éviter ces surtensions de sorte que les panneaux photovoltaïques ENR ne se déconnectent pas, et ce sans nécessairement de « chef d'orchestre », c'est-à-dire sans requérir un lien de communication entre les différentes charges CEJ.

Le système comporte une pluralité de lots de matériels disposés en une pluralité de logements ou similaires, connectés au réseau, chaque lot de matériel étant positionné en un point de commande.

De préférence comme on l'a schématisé sur la figure 1 la présente invention se présente sous forme d'un module 100 de contrôle du niveau de tension sur le réseau d'alimentation électrique basse tension 10 comprenant des moyens de production électrique ENR, destiné à être intégré au niveau de chaque entité utilisatrice équipée d'une charge du type chauffe-eau à effet joule CEJ, chaque module comprenant :
- un système 110 de contrôle du type précité comprenant les moyens 120, 130 et 140,
- une charge formée d'un chauffe-eau à effet joule CEJ,
- un dispositif 150 de commande de la charge, c'est-à-dire du chauffe-eau à effet joule et
- un dispositif 160 indicateur de l'état de charge du chauffe-eau à effet joule qui indique si la charge est pleine ou non pleine. Ce dispositif peut notamment être un tore de courant. Ainsi si malgré une consigne de puissance strictement positive, le tore de courant mesure un courant quasi nul alors on en déduit que le ballon est saturé.

Le dispositif de commande 150 peut être formé d'un commutateur piloté par les moyens 130 et 140 pour être soit dans un état passant et permettre l'alimentation électrique de la charge CEJ ou dans un état ouvert et interrompre cette alimentation.

Les moyens 120 forment un dispositif de pilotage / lecture disposé dans chaque logement ou similaire. Il peut être composé d'un capteur de mesure de la tension locale ou être connecté à la sortie Télé Information Client du compteur (TIC). Il est également connecté à la charge pilotable CEJ. Ces moyens 120 sont adaptés pour lire la tension en temps réel, et pour enclencher l'alimentation d'une charge de préférence modulable en fonction de cette tension mesurée.

Une action localisée sur le réseau de distribution 10 peut avoir des conséquences sur la tension électrique du réseau partout sur la ligne basse tension. Ainsi en théorie, l'enclenchement local d'une charge ayant des effets sur l'ensemble du réseau 10, chaque ballon CEJ ne disposant que d'une information locale, il serait souhaitable que tous les ballons CEJ soient coordonnés.

Cependant la présente invention permet de s'affranchir d'une telle coordination.

Par ailleurs grâce aux moyens de l'invention l'enclenchement contrôlé des charges CEJ réparties sur le réseau basse tension 10 permet de contrôler les surtensions sans écrêtement de la production d'énergie électrique à base d'énergie renouvelable.

L'invention propose un système fonctionnant sans coordination entre les différents lots de matériel ou modules 100 de commande de charges CEJ, tout en évitant l'effet d'oscillation de tension sur le réseau 10 afin de garantir la stabilité de la tension.

Comme indiqué précédemment, le système conforme à la présente invention comprend des moyens adaptés pour éviter des oscillations résultant de l'activation du chauffe-eau à effet joule CEJ. Ceci permet d'éviter que dans un réseau de distribution avec plusieurs CEJs pilotés conformément à la présente invention, il existe un risque d'oscillation pouvant être généré par différents systèmes agissant de façon indépendante. L'impact sur la tension d'un CEJ est "visible" par les CEJs voisins, en fonction de l'impédance des conducteurs qui les relient. Les CEJs ont donc un impact cumulatif sur le niveau de tension du réseau.

Les CEJs ne sont pas communicants entre eux (les critères retenus dans le cadre de l'invention conduisent en effet à une solution qui ne nécessite pas d'organe de coordination des charges CEJs entre elles) mais le traitement implémenté dans les CEJs selon l'invention est robuste en termes de stabilité.

Plus précisément la présente invention permet d'éviter l'effet d'oscillation qui pourrait résulter d'une mise en consommation quasi-simultanée de plusieurs CEJs localisés dans une relative proximité dans un quartier, suite à une augmentation de tension.

L'invention permet en particulier d'éviter que suite à une mise en service d'une pluralité de CEJs visant à réduire la tension, le système n'entre dans des cycles d'oscillation résultant d'une diminution de la tension, puis d'une déconnexion en conséquence des CEJs et donc d'une nouvelle augmentation de tension entrainant une nouvelle mise en service des CEJs et ainsi de suite.

La présente invention permet également de s'adapter sans difficulté à un nombre croissant d'équipements participant au maintien du plan de tension sur le réseau.

### Fonctionnement du processus mis en œuvre par la présente invention

Le principe de fonctionnement de la logique appliquée à chaque CEJ est de préférence le suivant.

Lorsque la tension sur le réseau est proche d'une limite déterminée, par exemple de la limite de 1,1 p.u. (1,1 p.u. désigne 1,1 fois la valeur efficace de la tension nominale), les moyens 120 pilotent une diminution de la tension par ordre de mise en consommation du CEJ associé.

Les moyens 120 sont adaptés de sorte que la tension reste inférieure à une limite maximale normative, afin de permettre aux onduleurs des panneaux photovoltaïques de continuer à injecter de la production sur le réseau.

Ainsi le CEJ stocke de l'énergie sous forme d'eau chaude, tout en évitant une perte d'énergie renouvelable à cause de la déconnexion des panneaux photovoltaïques suite aux augmentations des valeurs de tension.

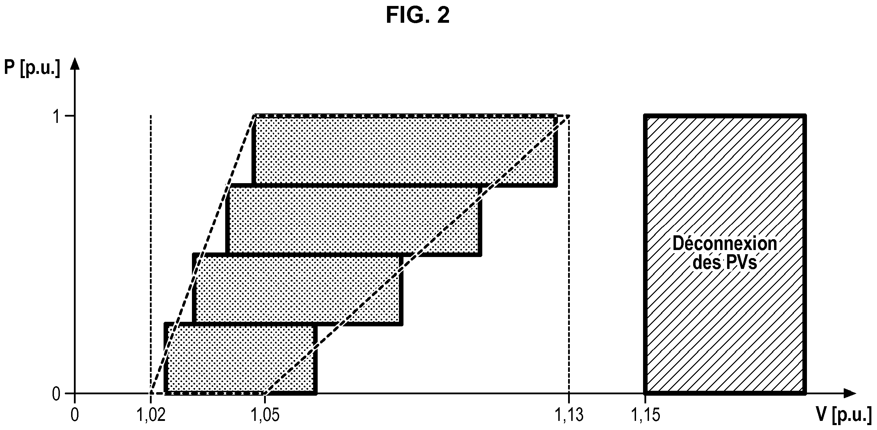

Les contraintes à respecter qui ont été identifiées dans le cadre de la présente invention sont les suivantes :
1. Limite inférieure de tension de démarrage de CEJ : chaque CEJ doit démarrer sa consommation à un niveau de tension suffisamment élevé car il a une capacité limitée de stockage ;
2. Limite supérieure de tension de l'hystérésis de fonctionnement de CEJ : chaque CEJ doit être correctement en marche (à sa puissance maximale) pour des valeurs inférieures à la limite de découplage des onduleurs des panneaux photovoltaïque;
3. De préférence flexibilité de mise en service des CEJ par palier en fonction de l'impact sur la tension : chaque CEJ doit avoir des impacts limités et surtout maitrisés. Une puissance modulable permet de mieux maitriser et limiter l'impact de chaque CEJ sur la tension. Des solutions conformes à la présente invention sont d'utiliser des charges comprenant plusieurs modules ou éléments, notamment des CEJ à plusieurs résistances, par exemple à trois résistances (de tels CEJ existent sur le marché), ou des résistances pilotables. Dans ce contexte, chaque palier peut par exemple être assimilé à un module ou élément, une résistance dans le cas d'un CEJ. Le processus mis en œuvre dans le cadre de la présente invention est adapté pour permettre d'enclencher/déconnecter un module (une résistance) à la fois, même si, pour le niveau de tension mesurée, plusieurs modules de résistance sont en théorie nécessaires. Cette logique de traitement permet de limiter par palier la tension afin d'optimiser la capacité de stockage du CEJ et d'éviter un changement brutal de tension si cette action est réalisée en cascade par tous les CEJ voisins. Un palier de puissance correspond donc à une plage de tension mesurée.
4. Suivi d'une hystérésis : Comme illustré sur la figure 2 le processus mis en œuvre dans le cadre de la présente invention suit une équation qui relie la puissance de chaque CEJ et la tension mesurée. Cette équation est définie par une hystérésis pour une stabilité améliorée.
5. Etape d'auto-apprentissage : Une mesure de la variation de la tension est réalisée par la connexion et la déconnexion d'une résistance. Cette procédure est répétée plusieurs fois, par exemple 4 fois, en obtenant plusieurs deltaV moyennés, par exemple 8 deltaV moyennés, pour obtenir l'impact. Cette mesure est réalisée pendant une période arbitraire afin de ne pas avoir plusieurs CEJs qui font leurs estimations en même temps. De préférence, selon la présente invention des tests d'impact sont opérés pendant la nuit (lors de l'installation du CEJ, régulièrement ou à la demande), quand il y a moins de perturbations induites par les autres variations de consommation des clients, ce qui garantit une mesure plus précise, en prenant en compte uniquement le propre impact de chaque CEJ sur la variation de tension. La mesure de deltaV par rapport à la résistance connectée repose sur l'impédance entre le CEJ et le transformateur. Indirectement toutes variations de tension à cause d'un moyen de production ENRs ou/et des moyens de stockage CEJs reposent sur cette impédance. L'auto-apprentissage permet de réaliser l'estimation d'impact.
6. Estimation de l'impact sur le niveau de tension : chaque CEJ doit analyser son impact sur le niveau de tension. L'estimation de l'impact en tension est faite avant modification de la puissance de consigne de CEJ. Elle est faite par rapport à la tension mesurée. La consigne de puissance « P » est appliquée, c'est-à-dire qu'une résistance d'un CEJ est mise en service, uniquement si l'estimation indique que la nouvelle tension estimée reste dans la même plage du palier « P » voire exige une mise en service additionnelle d'au moins une autre résistance du CEJ, et a contrario n'est pas appliquée et donc aucune mise en service de résistance n'est opérée, si l'estimation indique que la nouvelle tension estimée retombe dans la plage d'origine inférieure de palier « P », ceci comme le comprendra l'homme du métier pour éviter des oscillations du système. La même logique est appliquée pour la prise de décision d'une déconnexion d'un palier « P ». Plus précisément l'invention permet d'éviter les oscillations instables de tension sur le réseau grâce à l'estimation d'impact qui repose sur l'auto-apprentissage et aux dispositions suivantes. Si la mise en service d'une résistance d'un CEJ n'apporte pas le deltaV estimé, le module continue d'insérer d'autres résistances. Une mesure de la température ou de la puissance permet alors d'éviter de demander Pmax quand le CEJ est bloqué due à la montée en température >60°C. Concernant les modules voisins : Chaque CEJ mesure la tension locale. Les caractéristiques d'hystérésis imposent des comportements différents pour chaque CEJ en fonction de la tension mesurée localement. Comme la tension aux bornes d'un CEJ est légèrement différente de la tension d'autres CEJs le comportement est aussi diffèrent.
7. Connaissance de la consigne du relais de température de chaque CEJ : le processus mis en œuvre dans le cadre de la présente invention dispose d'une information sur la puissance réelle (ou courant) mesurée aux bornes de chaque CEJ, ou tout simplement un retour du thermostat de régulation ou de la position du relais piloté en fonction de la température. Cette information indique si la consigne de puissance imposée par la logique est bien prise en compte, ce qui n'est pas le cas si le ballon est déjà saturé. Sans cette information, le processus risquerait d'imposer de raccorder un nombre croissant de résistances et de maintenir cette demande tant que la surtension persiste, malgré le fait que l'eau du CEJ ait atteint un niveau de température élevée (62°C) et ne puisse plus être chauffée davantage. Le risque serait donc, sans les précautions prises dans le cadre de l'invention, qu'une fois que la température de l'eau aurait diminué en dessous de sa limite (58°C), la consigne de puissance imposée par la logique serait finalement respectée et donc un ordre d'enclenchement de toutes les résistances du CEJ pourrait être effectué. La présente invention permet d'éviter cet impact important d'une puissance élevée. En conséquence, dans le cadre de l'invention, quand l'information du relais indique un blocage dû à l'atteinte de la capacité maximale de stockage du CEJ, la logique limite sa consigne à une seule résistance.

Sur la figure 2 la mise en service du premier élément d'une charge CEJ est opérée lorsque la tension sur le réseau dépasse la valeur nominale, d'un premier seuil prédéterminé, en l'espèce 1,05 p.u.. Cette disposition qui consiste à initier l'alimentation d'un CEJ à une valeur légèrement supérieure à 1 p.u. permet d'éviter un fonctionnement inutile et permet de préserver les CEJs pour les grosses valeurs de tension, c'est-à-dire pour des surtensions conséquentes.

Sur la figure 2 le premier élément de la charge CEJ est désactivé lorsque la tension sur le réseau redescend sous le premier seuil prédéterminé, plus précisément sous une valeur inférieure à ce premier seuil d'un écart suffisant pour créer un effet d'hystérésis, soit en l'espèce pour une valeur 1,02 p.u..

Un deuxième élément de la charge CEJ est mis en service pour une valeur de tension égale à 1,07 p.u. et désactivé pour une valeur de tension égale à 1, 029 p.u..

Un troisième élément de la charge CEJ est mis en service pour une valeur de tension égale à 1,09 p.u. et désactivé pour une valeur de tension égale à 1, 035 p.u..

Un quatrième élément de la charge CEJ est mis en service pour une valeur de tension égale à 1,115 p.u. et désactivé pour une valeur de tension égale à 1, 042 p.u..

L'hystérésis illustrée sur la figure 2 présente des pentes différentes ΔP / ΔV selon que la tension est croissante (ΔV / Δt > 0) ou est décroissante (ΔV / Δt < 0) et permet une stabilité de V suite à une variation de P.

L'on notera que l'écart entre le seuil de mise en service du premier élément de charge CEJ (1,05 p.u.) et le seuil de mise en service du dernier élément de charge CEJ (1,115 p.u.) est important (plus du double de l'écart entre les seuils de mise en service et respectivement de déconnexion du premier élément de CEJ) pour éviter que la mise en service d'une charge CEJ ait un impact trop important sur la tension. Ceci permet d'améliorer la stabilité.

Sur la figure 2 le seuil supérieur de déconnexion des charges CEJ est fixé à 1,13 p.u.. Il est inférieur (d'un écart égal à 0,02 p.u.) à la valeur de déconnexion des panneaux voltaïques fixée à 1,15 p.u.. Cet écart de 0,02 p.u. permet d'éviter des perturbations sur le fonctionnement des charges CEJ lors des déconnexions de panneaux photovoltaïques. Il permet aussi de garantir un fonctionnement au maximum de puissance du CEJ à une tension inférieure au seuil de déclenchement des Panneaux Photovoltaïques, tout en respectant une marge d'erreur de mesure.

### Réglages de la logique

Comme décrit ci-dessus dans les contraintes à respecter pour les éléments 1, 2, 3 et 4, l'hystérésis choisie est présentée sur la Figure 2. Dans cet exemple, la figure 2 illustre un réglage d'un CEJ à 4 résistances. Le choix du nombre de résistances a été fait suite à des résultats obtenus lors d'essais de 1 jusqu'à 10 résistances, tout en gardant la même puissance nominale totale d'un CEJ. L'optimisation du choix est faite en minimisant le nombre de résistances qui assurent la stabilité. Un nombre trop élevé de résistances génère des modifications trop fréquentes. Un nombre insuffisant de résistances a un impact important par résistance connectée. Dans le cas d'une charge capable de moduler de façon continue de 0 à 100%, le choix des paliers est libre et indépendant du nombre de résistances. Malgré la flexibilité d'une telle charge, les consignes de puissance ne devront pas varier linéairement avec la tension pour des raisons de stabilité (en d'autres termes les seuils d'activation doivent différer des seuils de désactivation).

Pour améliorer la flexibilité de l'impact de mise en service d'un CEJ sur la tension, par l'optimisation du nombre (éventuellement virtuel) de résistances, l'on dispose seulement d'une valeur optimale locale calculée au préalable qui dépend essentiellement de la configuration électrique du réseau :
- impédances des lignes ;
- production des panneaux photovoltaïques (puissance installée et courbe d'injection) ;
- consommation locale ;
- constitution du quartier/ impact des voisins.

### Procédé de commande d'une charge

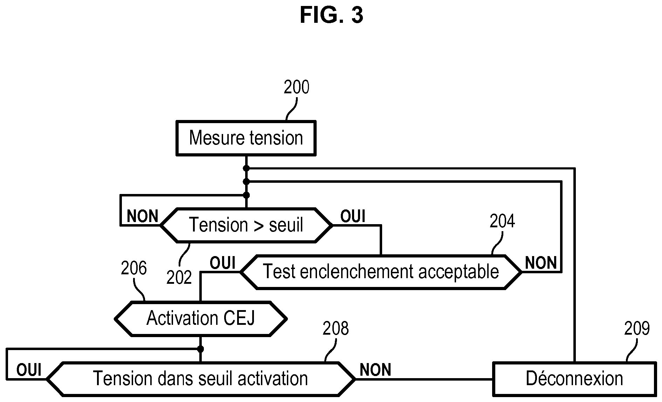

On va maintenant décrire le procédé basique de commande d'une charge conforme à la présente invention, en regard de la figure 3 annexée :
1- Un dispositif de pilotage / lecture 120 lit en temps réel la tension sur la sortie Télé Information Client (TIC) du compteur auquel il est connecté, ou réalise une mesure locale, comme illustré par l'étape 200 sur la figure 3.
2- Lorsqu'il détecte en son point de mesure une surtension sur le réseau (étape 202 sur la figure 3), le dispositif de pilotage / lecture 120 enclenche (étape 206 sur la figure 3) une partie de la charge en suivant un modèle hystérésis, par exemple celui illustré sur la figure 2. Comme illustré sur la figure 3 le procédé peut cependant comprendre une étape intermédiaire 204 de test qui n'autorise l'activation d'un CEJ à l'étape 206, bien qu'une surtension soit détectée à l'étape 202, que si l'impact de cette activation ne conduit pas une oscillation du système.
3- Le dispositif de pilotage / lecture 120 lit en temps réel la tension (étape 208) et arrête la charge (étape 209) lorsque la tension est globalement revenue à 1 p.u., c'est-à-dire au nominal.

De manière complémentaire, le procédé conforme à la présente invention peut comporter les étapes suivantes :
Le dispositif de pilotage / lecture 120 enclenche régulièrement la charge CEJ associée, de préférence la nuit, afin de mesurer l'effet de l'enclenchement de sa propre charge CEJ sur le réseau. Il s'agit d'évaluer son effet / contribution à la réduction de la tension sur le réseau : l'objectif est de savoir quelle est la variation de tension due à une variation de puissance pour chacun des chauffe-eau CEJ. Ensuite, cette estimation de l'effet d'une variation de puissance sur la tension locale permet de détecter les cas où une modification de consigne de puissance à l'instant t pourrait induire une modification de la tension locale telle que, à l'instant t+1, on annulerait la modification de puissance effectuée en t. Quand une telle situation est détectée alors on décide de ne pas modifier la consigne de puissance afin d'éviter d'inutiles oscillations de consignes de puissance. Plus formellement, la logique est la suivante :
- On connaît *V*_{[*t*-1,*t*]}, c'est-à-dire la tension à l'instant t-1. Grâce à l'estimateur de la variation de tension, les moyens 120 estiment la variation de tension à l'instant t notée *V̂*_{[*t*,*t*+1]}(Δ*P*_{[*t*-1,*t*]}) due à une variation de puissance en t-1 notée Δ*P*_{[*t*-1,*t*]}.
- Ensuite, on utilisant la logique de l'hystérésis les moyens 120 estiment quelle sera la variation de puissance à appliquer à l'instant t notée Δ*P̂*_{[*t*,*t*+1]}.
- Si, les moyens 120 déterminent que l'on se retrouve dans une configuration où Δ*P*_{[*t*-1,*t*]} = -Δ*P̂*_{[*t*,*t*+1]}, alors pour éviter une instabilité du système, la logique choisit de ne pas appliquer la variation de puissance en t-1 et ainsi on a Δ*P*_{[*t*-1,*t*]} = o.

Par ailleurs, l'estimateur de la variation de tension par rapport à une variation de consigne de puissance peut se faire sur un ensemble de cycles de connexion-déconnexion d'une unité de puissance. De préférence cette calibration est faite en demandant au moins 2 cycles de connexion et déconnexion et la moyenne des variations de tension obtenues est assimilée à une estimation de l'impact d'une variation de consigne de puissance sur la tension locale.

Lorsque la lecture de l'indicateur de charge indique que la charge CEJ est pleine, c'est-à-dire que la température de l'eau stockée est maximale, le dispositif de pilotage 120 stoppe l'alimentation de la charge CEJ. Si le dispositif ne dispose pas d'un indicateur de température, l'information de saturation pourra être obtenue via une mesure de courant de CEJ. Dans ce cas, le pilotage sera réalisé comme décrit dans la 7ème contrainte de fonctionnement.

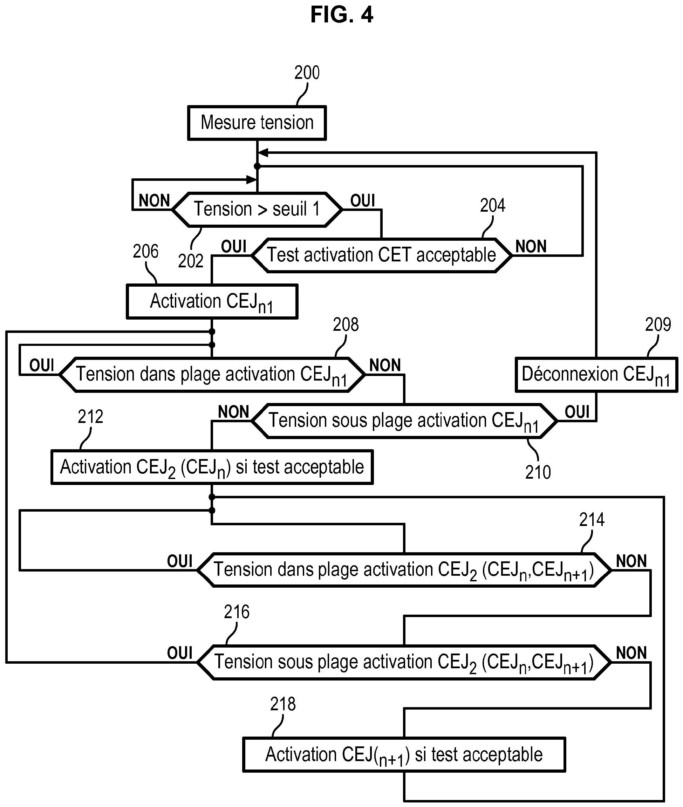

On va maintenant décrire la variante de réalisation du procédé conforme à la présente invention, illustrée sur la figure 4 annexée, qui met en œuvre une charge CEJ modulable par paliers CEJn1, CEJn2, etc CEJnn.

On retrouve sur la figure 4 les étapes 200 à 209 précités.

Cependant dans le cas de charges CEJ modulables par paliers, l'étape 208 est une étape de test visant à déterminer si la tension sur le réseau est ou non dans une plage associée à l'activation de la première charge CEJn1 précédemment activée. Dans l'affirmative le système reste dans l'état antérieur d'alimentation de cette charge CEJn1.

Dans la négative l'étape 208 est suivie d'une étape 210 qui consiste à tester si la tension sur le réseau est inférieure à la plage associée à l'activation de la charge CEJn1 précédemment activée.

Si le test de l'étape 210 est positif, la tension sur le réseau est redevenue inférieure à une valeur qui autorise la déconnexion de CEJn1 à l'étape 209.

Au contraire si le test de l'étape 210 est négatif, la tension sur le réseau est supérieure à une nouvelle valeur seuil et une nouvelle résistance CEJn2 (plus généralement CEJnx) est alimentée à l'étape 212.

A nouveau une étape 214 scrute si la tension sur le réseau est dans la plage d'activation de cette nouvelle résistance alimentée CEJnx. Dans l'affirmative le système reste dans l'état antérieur d'alimentation de cette charge CEJnx.

Dans la négative l'étape 214 est suivie d'une étape 216 qui consiste à tester si la tension sur le réseau est inférieure à la plage associée à l'activation de la charge CEJnx précédemment activée.

Si le test de l'étape 216 est positif, la tension sur le réseau est redevenue inférieure à une valeur qui a priori autorise la déconnexion au moins de la résistance CEJnx et pour cela le processus est repris à l'étape 208.

Au contraire si le test de l'étape 216 est négatif, la tension sur le réseau est supérieure à une nouvelle valeur seuil et une nouvelle résistance CEJnx+1 est alimentée à l'étape 218, et le processus est suivi par la réitération de l'étape 214.

Les boucles d'itération sont limitées lorsque toutes les résistances d'une charge donnée CEJ sont alimentées.

Comme indiqué précédemment, l'invention a été décrite en référence à un mode de réalisation dans lequel le moyen de stockage d'énergie est formé d'un chauffe-eau à effet joule à accumulation, dans un but de simplification. Cependant l'invention n'est pas limitée à ce mode de réalisation particulier. Elle englobe toute variante de moyen de stockage d'énergie à base d'une alimentation électrique, notamment et non exclusivement, des batteries électriques, en particulier des batteries comprenant plusieurs cellules ou modules pour permettre de moduler la puissance consommée à partir du réseau de distribution comme indiqué pour les différentes résistances composant un chauffe-eau à effet joule, ou encore toute autre charge, notamment résistive, associée à un stockage de chaleur.

Pour une adaptation avec des batteries, il est de préférence nécessaire de piloter la décharge en dehors des périodes de pic de production par les moyens de production, notamment lorsqu'il s'agit de moyens de production d'énergie électrique à bas d'énergie renouvelable.

## Revendications

1. Système de contrôle du niveau de tension sur un réseau d'alimentation électrique basse tension comprenant des moyens de production électrique, notamment un réseau comprenant des moyens de production électrique à base d'énergie renouvelable (ENR), et comportant des moyens de stockage d'énergie du type batteries électriques ou charges, notamment résistives, associées à un besoin d'utilisateurs, en particulier un chauffe-eau à effet joule (CEJ), comprenant :
. des moyens (120) adaptés pour mesurer la tension sur le réseau,
. des moyens adaptés pour activer et désactiver tout ou partie des moyens de stockage d'énergie, par exemple d'un chauffe-eau à effet joule (CEJ),
. des moyens (130) adaptés pour piloter l'activation et la désactivation des moyens de stockage d'énergie, par exemple d'un chauffe-eau à effet joule (CEJ), en fonction de la tension mesurée sur le réseau par rapport à des seuils prédéterminés, et
**caractérisé par le fait qu'**il comprend :
. des moyens (120) adaptés pour estimer l'impact d'une activation du moyen de stockage d'énergie, par exemple du chauffe-eau à effet joule, sur la tension du réseau et pour n'autoriser une activation du moyen de stockage d'énergie, par exemple du chauffe-eau à effet joule, que si cette activation ne conduit pas à une oscillation entre des cycles successifs d'activation et de désactivation pour éviter des oscillations résultant de l'activation et de la désactivation des moyens de stockage d'énergie, par exemple du chauffe-eau à effet joule (CEJ).

2. Système selon la revendication 1, **caractérisé par le fait que** chaque moyen de stockage d'énergie, par exemple chaque chauffe-eau à effet joule (CEJ), a une puissance modulable.

3. Système selon la revendication 2, **caractérisé par le fait que** chaque moyen de stockage d'énergie, par exemple chaque chauffe-eau à effet joule (CEJ), comprend plusieurs éléments ou modules, par exemple plusieurs résistances, de préférence entre 2 et 5 éléments ou modules, typiquement 4 éléments ou modules, pour permettre une modulation par palier de la consommation activée en fonction du niveau de tension mesurée sur le réseau.

4. Système selon la revendication 2, **caractérisé par le fait que** chaque moyen de stockage d'énergie, par exemple chaque chauffe-eau à effet joule (CEJ), a une puissance modulable en continu.

5. Système selon l'une des revendications 1 à 4, **caractérisé par le fait que** la loi définissant la puissance de consommation demandée au moyen de stockage d'énergie, par exemple au chauffe-eau à effet joule (CEJ), en fonction de la tension mesurée sur le réseau présente une hystérésis.

6. Système selon l'une des revendications 1 à 5, **caractérisé par le fait qu'**il comprend des moyens qui détectent l'état du moyen de stockage d'énergie, par exemple du chauffe-eau à effet joule (CEJ), et qui limitent l'activation du moyen de stockage d'énergie, par exemple du chauffe-eau à effet joule, lorsque celui-ci a atteint sa capacité maximale de stockage.

7. Système selon l'une des revendications 1 à 6, **caractérisé par le fait qu'**il est relié à la sortie télé-information d'un compteur électrique et au module de pilotage d'un moyen de stockage d'énergie, par exemple d'un chauffe-eau à effet joule (CEJ).

8. Système selon l'une des revendications 1 à 7, **caractérisé par le fait qu'**il comprend également des moyens (140) adaptés pour désactiver les moyens de stockage d'énergie, par exemple le chauffe-eau à effet joule CEJ associé, lorsque l'écart entre la tension sur le réseau (10) et une valeur de découplage des moyens de production électrique ENR devient inférieur à un seuil spécifique prédéterminé,

9. Ensemble comprenant une pluralité de systèmes selon l'une des revendications 1 à 8, **caractérisé par le fait que** les systèmes sont associés respectivement à un logement dédié ou similaire et fonctionnent indépendamment les uns des autres.

10. Module de contrôle du niveau de tension sur un réseau d'alimentation électrique basse tension comprenant des moyens de production électrique, notamment un réseau comprenant des moyens de production électrique à base d'énergie renouvelable, **caractérisé par le fait qu'**il comprend :
. un système de contrôle conforme à l'une des revendications 1 à 8,
. un moyen de stockage d'énergie, du type batteries électriques ou charges notamment résistives associées à un stockage de chaleur, par exemple un chauffe-eau à effet joule (CEJ),
. un dispositif de commande (150) du moyen de stockage d'énergie, par exemple du chauffe-eau à effet joule (CEJ) et
. un dispositif indicateur (160) de saturation du moyen de stockage d'énergie, par exemple du chauffe-eau à effet joule, qui indique si la charge est pleine ou non pleine.

11. Procédé de contrôle du niveau de tension sur un réseau d'alimentation électrique basse tension comprenant des moyens de production électrique, notamment un réseau comprenant des moyens de production électrique à base d'énergie renouvelable, et un moyen de stockage d'énergie, du type batteries électriques ou charges notamment résistives associées à un stockage de chaleur, par exemple un chauffe-eau à effet joule, comprenant les étapes qui consistent à :
. mesurer (200) la tension sur le réseau,
. activer (206) tout ou partie de la puissance d'un moyen de stockage, par exemple d'un chauffe-eau à effet joule, lorsque la tension sur le réseau dépasse la valeur de seuils prédéterminés,
. désactiver (209) tout ou partie de la puissance d'un moyen de stockage d'énergie, par exemple d'un chauffe-eau à effet joule, lorsque la tension mesurée sur le réseau devient inférieure à des seuils prédéterminés, et
le procédé étant **caractérisé en ce qu'**il comprend l'étape consistant à :
. anticiper (204) les effets d'un changement de consigne pour éviter des oscillations résultant de séquences répétitives d'activation/désactivation de tout ou partie du moyen de stockage d'énergie, par exemple de la puissance d'un chauffe-eau à effet joule, à l'aide de moyens adaptés pour estimer l'impact d'une activation du moyen de stockage d'énergie, par exemple du chauffe-eau à effet joule, sur la tension du réseau et pour n'autoriser une activation du moyen de stockage d'énergie, par exemple du chauffe-eau à effet joule, que si cette activation ne conduit pas à une oscillation entre des cycles successifs d'activation et de désactivation.

## Patentansprüche

1. System zur Kontrolle des Spannungsniveaus in einem Niedrigspannungs-Stromversorgungsnetz, umfassend Mittel zur Stromerzeugung, insbesondere ein Netz, das Mittel zur Stromerzeugung auf Basis erneuerbarer Energie (ENR) umfasst, und umfassend Mittel zur Energiespeicherung vom Typ elektrische Batterie oder Lasten, insbesondere ohmsche, die einem Bedarf von Benutzern zugeordnet sind, insbesondere ein Boiler mit Joule-Effekt (CEJ), umfassend:
- Mittel (120), die angepasst sind, um die Spannung in dem Netz zu messen,
- Mittel, die angepasst sind, um alle oder einen Teil der Mittel zur Energiespeicherung, zum Beispiel eines Boilers mit Joule-Effekt (CEJ), zu aktivieren und deaktivieren,
- Mittel (130), die angepasst sind, um die Aktivierung und die Deaktivierung der Mittel zur Energiespeicherung, zum Beispiel eines Boilers mit Joule-Effekt (CEJ), in Abhängigkeit von der in dem Netz gemessenen Spannung in Bezug auf vorbestimmte Grenzwerte anzusteuern, und
**dadurch gekennzeichnet, dass** es umfasst:
- Mittel (120), die angepasst sind, um die Auswirkung einer Aktivierung des Mittels zur Energiespeicherung, zum Beispiel des Boilers mit Joule-Effekt, auf die Spannung des Netzes zu schätzen, und um eine Aktivierung des Mittels zur Energiespeicherung, zum Beispiel des Boilers mit Joule-Effekt, nur dann zuzulassen, wenn diese Aktivierung nicht zu einer Oszillation zwischen aufeinanderfolgenden Zyklen von Aktivierung und Deaktivierung führt, um Oszillationen zu vermeiden, die aus der Aktivierung und der Deaktivierung der Mittel zur Energiespeicherung, zum Beispiel des Boilers mit Joule-Effekt (CEJ), resultieren.

2. System nach Anspruch 1, **dadurch gekennzeichnet, dass** jedes Mittel zur Energiespeicherung, zum Beispiel jeder Boiler mit Joule-Effekt (CEJ), eine modulierbare Leistung aufweist.

3. System nach Anspruch 2, **dadurch gekennzeichnet, dass** jedes Mittel zur Energiespeicherung, zum Beispiel jeder Boiler mit Joule-Effekt (CEJ), mehrere Elemente oder Module, zum Beispiel mehrere Widerstände, vorzugsweise zwischen 2 und 5 Elemente oder Module, üblicherweise 4 Elemente oder Module, umfasst, um eine schrittweise Modulation des aktivierten Verbrauchs in Abhängigkeit von dem in dem Netz gemessenen Spannungsniveau zu ermöglichen.

4. System nach Anspruch 2, **dadurch gekennzeichnet, dass** jedes Mittel zur Energiespeicherung, zum Beispiel jeder Boiler mit Joule-Effekt (CEJ), eine kontinuierlich modulierbare Leistung aufweist.

5. System nach einem der Ansprüche 1 bis 4, **dadurch gekennzeichnet, dass** das Gesetz, das die Verbrauchsleistung, die von dem Mittel zur Energiespeicherung, zum Beispiel von dem Boiler mit Joule-Effekt (CEJ), in Abhängigkeit von der in dem Netz gemessenen Spannung gefordert wird, eine Hysterese aufweist.

6. System nach einem der Ansprüche 1 bis 5, **dadurch gekennzeichnet, dass** es Mittel umfasst, die den Zustand des Mittels zur Energiespeicherung, zum Beispiel des Boilers mit Joule-Effekt (CEJ), erfassen und die die Aktivierung des Mittels zur Energiespeicherung, zum Beispiel des Boilers mit Joule-Effekt, begrenzen, wenn dieses seine maximale Speicherkapazität erreicht hat.

7. System nach einem der Ansprüche 1 bis 6, **dadurch gekennzeichnet, dass** es mit dem Teleinformationsausgang eines Stromzählers und mit dem Modul zur Ansteuerung eines Mittels zur Energiespeicherung, zum Beispiel eines Boilers mit Joule-Effekt (CEJ), verbunden ist.

8. System nach einem der Ansprüche 1 bis 7, **dadurch gekennzeichnet, dass** es ebenfalls Mittel (140) umfasst, die angepasst sind, um die Mittel zur Energiespeicherung, zum Beispiel den zugeordneten Boiler mit Joule-Effekt CEJ, zu deaktivieren, wenn der Unterschied zwischen der Spannung in dem Netz (10) und einem Entkopplungswert der Mittel zur Stromerzeugung ENR kleiner als ein vorbestimmter, spezifischer Grenzwert wird.

9. Einheit, umfassend eine Vielzahl von Systemen nach einem der Ansprüche 1 bis 8, **dadurch gekennzeichnet, dass** die Systeme jeweils einer dedizierten oder ähnlichen Aufnahme zugeordnet sind und unabhängig voneinander funktionieren.

10. Modul zur Kontrolle des Spannungsniveaus in einem Niedrigspannungs-Stromversorgungsnetz, umfassend Mittel zur Stromerzeugung, insbesondere ein Netz, das Mittel zur Stromerzeugung auf Basis erneuerbarer Energie umfasst, **dadurch gekennzeichnet, dass** es umfasst:
- ein System zur Kontrolle nach einem der Ansprüche 1 bis 8,
- ein Mittel zur Energiespeicherung, vom Typ elektrische Batterien oder Lasten, insbesondere ohmsche, die einem Wärmespeicher zugeordnet sind, zum Beispiel ein Boiler mit Joule-Effekt (CEJ),
- eine Vorrichtung zur Steuerung (150) des Mittels zur Energiespeicherung, zum Beispiel des Boilers mit Joule-Effekt (CEJ), und
- eine Anzeigevorrichtung (160) der Sättigung des Mittels zur Energiespeicherung, zum Beispiel des Boilers mit Joule-Effekt, die anzeigt, ob die Ladung voll oder nicht voll ist.

11. Verfahren zur Kontrolle des Spannungsniveaus in einem Niedrigspannungs-Stromversorgungsnetz, umfassend Mittel zur Stromerzeugung, insbesondere ein Netz, das Mittel zur Stromerzeugung auf Basis erneuerbarer Energie umfasst, und ein Mittel zur Energiespeicherung, vom Typ elektrische Batterien oder Lasten, insbesondere ohmsche, die einem Wärmespeicher zugeordnet sind, zum Beispiel ein Boiler mit Joule-Effekt, umfassend die Schritte, die in Folgendem bestehen:
. Messen (200) der Spannung in dem Netz,
. Aktivieren (206) der gesamten oder eines Teils der Leistung eines Speichermittels, zum Beispiel eines Boilers mit Joule-Effekt, wenn die Spannung in dem Netz den Wert vorbestimmter Grenzwerte übersteigt,
. Deaktivieren (209) der gesamten oder eines Teils der Leistung eines Mittels zur Energiespeicherung, zum Beispiel eines Boilers mit Joule-Effekt, wenn die in dem Netz gemessene Spannung kleiner als vorbestimmte Grenzwerte wird, und
wobei das Verfahren **dadurch gekennzeichnet ist, dass** es den Schritt umfasst, der in Folgendem besteht:
. Antizipieren (204) der Effekte einer Sollwertänderung, um Oszillationen zu vermeiden, die aus wiederholten Abfolgen von Aktivierung/Deaktivierung des gesamten oder eines Teils des Mittels zur Energiespeicherung, zum Beispiel der Leistung eines Boilers mit Joule-Effekt, resultieren, mithilfe von Mitteln, die angepasst sind, um die Auswirkung einer Aktivierung des Mittels zur Energiespeicherung, zum Beispiel des Boilers mit Joule-Effekt, auf die Spannung des Netzes zu schätzen, und um eine Aktivierung des Mittels zur Energiespeicherung, zum Beispiel des Boilers mit Joule-Effekt, nur dann zuzulassen, wenn diese Aktivierung nicht zu einer Oszillation zwischen aufeinanderfolgenden Zyklen von Aktivierung und Deaktivierung führt.

## Claims

1. A system for monitoring the voltage level on a low-voltage power supply network comprising power generation means, in particular a network comprising renewable energy-based power generation means (ENR), and including energy storage means such as electric batteries or particularly resistive loads associated with a user need, in particular a Joule water heater (CEJ), comprising:
. means (120) adapted to measure the voltage on the network,
. means adapted to activate and deactivate all or part of the energy storage means, for example a Joule water heater (CEJ),
. means (130) adapted to drive the activation and the deactivation of the energy storage means, for example of a Joule water heater (CEJ), depending on the voltage measured on the network relative to predetermined thresholds, and
**characterised in that** it comprises:
. means (120) adapted to estimate the impact of an activation of the energy storage means, for example of the Joule water heater, on the network voltage and to enable an activation of the energy storage means, for example of the Joule water heater, only if this activation does not lead to an oscillation between successive activation and deactivation cycles to avoid oscillations resulting from the activation and the deactivation of the energy storage means, for example of the Joule water heater (CEJ).

2. The system according to claim 1, **characterised in that** each energy storage means, for example each Joule water heater (CEJ), has a modulatable power.

3. The system according to claim 2, **characterised in that** each energy storage means, for example each Joule water heater (CEJ), comprises several elements or modules, for example several resistors, preferably between 2 and 5 elements or modules, typically 4 elements or modules, to allow a stepwise modulation of the consumption which is activated depending on the level of voltage measured on the network.

4. The system according to claim 2, **characterised in that** each energy storage means, for example each Joule water heater (CEJ), has a continuously modulatable power.

5. The system according to one of claims 1 to 4, **characterised in that** the law defining the consumption power requested from the energy storage means, for example from the Joule water heater (CEJ), depending on the voltage measured on the network has a hysteresis.

6. The system according to one of claims 1 to 5, **characterised in that** it comprises means which detect the state of the energy storage means, for example of the Joule water heater (CEJ), and which limit the activation of the energy storage means, for example of the Joule water heater, when the latter has reached the maximum storage capacity thereof.

7. The system according to one of claims 1 to 6, **characterised in that** it is connected to the remote information output of an electric meter and to the module for driving an energy storage means, for example a Joule water heater (CEJ).

8. The system according to one of claims 1 to 7, **characterised in that** it also comprises means (140) adapted to deactivate the energy storage means, for example the associated Joule water heater CEJ, when the difference between the voltage on the network (10) and a decoupling value of the power generation means ENR becomes less than a predetermined specific threshold.

9. An assembly comprising a plurality of systems according to one of claims 1 to 8, **characterised in that** the systems are associated respectively with a dedicated housing or the like and operate independently of each other.

10. A module for monitoring the voltage level on a low-voltage power supply network comprising power generation means, in particular a network comprising renewable energy-based power generation means, **characterised in that** it comprises:
. a monitoring system in accordance with one of claims 1 to 8,
. energy storage means, such as electric batteries or particularly resistive loads associated with a heat storage, for example a Joule water heater (CEJ),
. a device (150) for controlling the energy storage means, for example the Joule water heater (CEJ) and
. a device (160) indicating the saturation of the energy storage means, for example of the Joule water heater, which indicates whether the load is full or not full.

11. A method for monitoring the voltage level on a low-voltage power supply network comprising power generation means, in particular a network comprising renewable energy-based power generation means, and energy storage means, such as electric batteries or particularly resistive loads associated with a heat storage, for example a Joule water heater, comprising the steps which consist in:
. measuring (200) the voltage on the network,
. activating (206) all or part of the power of a storage means, for example a Joule water heater, when the voltage on the network exceeds the value of predetermined thresholds,
. deactivating (209) all or part of the power of an energy storage means, for example a Joule water heater, when the voltage measured on the network falls below predetermined thresholds, and
the method being **characterised in that** it comprises the step consisting in:
. anticipating (204) the effects of a setpoint change to avoid oscillations resulting from repetitive activation/deactivation sequences of all or part of the energy storage means, for example of the power of a Joule water heater, using means adapted to estimate the impact of an activation of the energy storage means, for example of the Joule water heater, on the network voltage and to enable an activation of the energy storage means, for example of the Joule water heater, only if this activation does not lead to an oscillation between successive activation and deactivation cycles.
